# EUROPEAN PATENT APPLICATION

(11) **EP 3 208 875 A1**
(43) Date of publication of application: **23.08.2017**
(21) Application number: 17155786.1
(22) Date of filing: 13.02.2017
(51) Int. Cl.: H01M 8/04029, H01M 8/0432, H01M 8/04701, H01M 8/04746, H01M 8/2418, H01M 8/0267

(54) **HIGH TEMPERATURE POLYMER ELECTROLYTE MEMBRANE FUEL CELL STACK FOR UNIFORM STACK TEMPERATURE DISTRIBUTION, CONTROLLING METHOD THEREOF, AND NON-TRANSITORY COMPUTER-READABLE MEDIUM THEREOF**

(30) Priority: 16.02.2016 KR 20160017738
(71) Applicant: Korea Institute of Energy Research, Daejeon 34129 (KR)
(72) Inventor: KIM, Minjin, 34069 Daejeon (KR); SOHN, Young-Jun, 34049 Daejeon (KR); KIM, Ji Hun, 18130 Gyeonggi-do (KR); KIM, Seung-Gon, 34082 Daejeon (KR); PARK, Gu-Gon, 34049 Daejeon (KR); BAE, Byungchan, 34049 Daejeon (KR); YIM, Sung-Dae, 34130 Daejeon (KR); PARK, Seok-Hee, 34049 Daejeon (KR); YANG, Tae-Hyun, 34120 Daejeon (KR); LEE, Won-Yong, 34032 Daejeon (KR); KIM, Chang-Soo, 22310 Incheon (KR)
(74) Representative: Klunker IP Patentanwälte PartG mbB

(57) **Abstract**

A high-temperature polymer electrolyte membrane fuel cell stack may include a plurality of cell units; a cooling assembly including a plurality of first independent cooling plates disposed on top surfaces of the plurality of cell units, respectively, and a plurality of second independent cooling plates disposed on bottom surfaces of the plurality of cell units, respectively; and a support assembly configured to support the plurality of cell units and the cooling assembly; and at least one temperature installed on at least one of the plurality of first independent cooling plates and the plurality of second independent cooling plates.

## Description

### CROSS-REFERENCE TO RELATED APPLICATIONS

This application claims the priority benefit of Korean Patent Application No. 10-2016-0017738 filed on February 16, 2016, in the Korean Intellectual Property Office, the disclosures of which are incorporated herein by reference.

### BACKGROUND

### 1. Field of the Invention

At least one example embodiment relates to a high-temperature polymer electrolyte membrane fuel cell stack for a uniform stack temperature distribution, a controlling method thereof, and a non-transitory computer-readable medium thereof.

### 2. Description of the Related Art

A fuel cell has advantages, such as high efficiency, environment friendliness, high output density, and the like, and also has gained great attention as promising future clean energy technology. An existing low-temperature polymer electrolyte membrane fuel cell (LT-PEMFC) experiences difficulty in its commercialization due to some reasons. A water management system, for example, a humidifier, a water trap, etc., may be used to operate the low-temperature polymer electrolyte membrane fuel cell. In addition, the fuel supply is difficult and hydrogen having a relatively low concentration for specific impurity is to be used. The heat obtainable by operating the low-temperature polymer electrolyte membrane fuel cell has a low exhaust heat temperature and thus, can be limitedly used. As an alternative of the low-temperature polymer electrolyte membrane fuel cell, research on a high-temperature polymer electrolyte membrane fuel cell (HT-PEMFC) is actively ongoing. The high-temperature polymer electrolyte membrane fuel cell may use a polybenzimidazole (PBI)-based electrolyte membrane on which phosphoric acid is doped and may be operable without using separate humidification. In addition, since water generated by the operation of the fuel cell occurs in a form of vapor, a separate water trap is not required. Also, if the high-temperature polymer electrolyte membrane fuel cell is at an operation temperature of 150 to 180□, poisoning of CO may occur. A performance degradation phenomenon of a membrane electrode assembly (MEA) by such poisoning of CO may be remarkably reduced. Accordingly, the high-temperature polymer electrolyte membrane fuel cell may be resistant up to CO concentration of 3%. .Due to the above phenomenon, a CO removal process may be reduced, or alternatively, minimized during a hydrogen reforming process. Also, since a high exhaust heat temperature close to 100□ may be obtained, thermal energy may be variously available.

However, further developments are still required for the high-temperature polymer electrolyte membrane fuel cell. Theoretically, the high-temperature polymer electrolyte membrane fuel cell has a high electrochemical reaction speed. However, the performance of the actually developed high-temperature polymer electrolyte membrane fuel cell does not reach the performance of the low-temperature polymer electrolyte membrane fuel cell. Due to harsh operation conditions, for example, exposure to phosphoric acid and high temperature, the high-temperature polymer electrolyte membrane fuel cell has a vulnerable durability and a relatively short cell life.

For example, if a portion of the fuel cell is damaged under a high temperature operating condition, a refrigerant may permeate a membrane electrode assembly (MEA) and the performance of the fuel cell may be degraded. Also, oil used as a refrigerant of a high-temperature polymer electrolyte membrane fuel cell stack has a relatively high viscosity. Thus, the oil may cause a high differential pressure in a circulating path, which may also lead to damaging the fuel cell. Also, the high-temperature polymer electrolyte membrane fuel cell stack has a relatively significant internal temperature deviation compared to the low-temperature polymer electrolyte membrane fuel cell stack. Thus, a performance, a degradation level, and a cell life, that is, a lifespan of the fuel cell stack may greatly vary depending on a temperature management.

### SUMMARY

At least one example embodiment provides a high-temperature polymer electrolyte membrane fuel cell stack having an excellent durability and performance.

At least one example embodiment also provides a high-temperature polymer electrolyte membrane fuel cell stack that may improve a uniform stack temperature distribution, and a controlling method thereof.

According to an aspect of at least one example embodiment, there is provided a high-temperature polymer electrolyte membrane fuel cell stack including a cell unit; a first independent cooling plate disposed on a top surface of the cell unit; a second independent cooling plate disposed on a bottom surface of the cell unit; a first buffering layer disposed between the first independent cooling plate and the top surface of the cell unit and configured to reduce a contact resistance between the first independent cooling plate and the top surface of the cell unit; a second buffering layer disposed between the second independent cooling plate and the bottom surface of the cell unit and configured to reduce a contact resistance between the second independent cooling plate and the bottom surface of the cell unit. Each of the first independent cooling plate and the second independent cooling plate is formed using a metal material having a strength than a material of the cell unit.

The first buffering layer or the second buffering layer may be a gas diffusion layer (GDL), a gas diffusion layer on which a micro porous layer (MPL) is stacked, a layer formed using Grafoil, and a layer formed using a metal form.

The high-temperature polymer electrolyte membrane fuel cell stack may further include a support assembly configured to support the cell unit, the first independent cooling plate, and the second independent cooling plate.

The high-temperature polymer electrolyte membrane fuel cell stack may further include at least one temperature sensor installed on at least one of the first independent cooling plate and the second independent cooling plate.

The cell unit may be configured by stacking a plurality of separating plates.

Each of the plurality of separating plates may include a hydrogen flow path through which hydrogen flows and an air flow path through which air flows, and may not include a refrigerant flow path through which a refrigerant flows.

The high-temperature polymer electrolyte membrane fuel cell stack may further include a controller configured to control a flow rate or a temperature of a refrigerant that flows in at least one of the first independent cooling plate and the second independent cooling plate. The controller may be further configured to control the flow rate or the temperature of the refrigerant based on a temperature sensed at the temperature sensor.

The temperature sensor may be a thermal couple.

According to another aspect of at least one example embodiment, there is provided a controlling method of a high-temperature polymer electrolyte membrane fuel cell stack, the method including sensing a temperature using a plurality of temperature sensors installed on a plurality of cooling plates for cooling a cell unit, respectively; determining a minimum temperature and a maximum temperature based on the temperatures sensed at the plurality of temperature sensors; and controlling a flow rate or a temperature of a refrigerant that flows in the plurality of cooling plates based on information about the minimum temperature and the maximum temperature.

The high-temperature polymer electrolyte membrane fuel cell stack controlling method may further include determining whether the minimum temperature is greater than a first setting temperature; and determining whether the maximum temperature is less than a second setting temperature that is greater than the first setting temperature.

The high-temperature polymer electrolyte membrane fuel cell stack controlling method may further include calculating a maximum temperature deviation based on the minimum temperature and the maximum temperature; and determining whether the maximum temperature deviation is less than a setting temperature deviation.

According to another aspect of at least one example embodiment, there is provided a non-transitory computer-readable medium storing a program to implement a controlling method of a high-temperature polymer electrolyte membrane fuel cell stack, the method including sensing a temperature using a plurality of temperature sensors installed on a plurality of cooling plates for cooling a cell unit, respectively; determining a minimum temperature and a maximum temperature based on the temperatures sensed at the plurality of temperature sensors; and controlling a flow rate or a temperature of a refrigerant that flows in the plurality of cooling plates based on information about the minimum temperature and the maximum temperature.

According to example embodiments, it is possible to achieve an excellent durability and performance using a new type of a cooling plate. Also, it is possible to uniformly manage a performance, a degradation level, and a cell life, that is, a lifespan of a fuel cell stack by achieving an enhanced uniform stack temperature distribution using a thermo couple attached to the new type of the cooling plate.

### BRIEF DESCRIPTION OF THE DRAWINGS

These and/or other aspects, features, and advantages of the present disclosure will become apparent and more readily appreciated from the following description of example embodiments, taken in conjunction with the accompanying drawings of which:
FIG. 1 is a front view of a high-temperature polymer electrolyte membrane fuel cell stack according to an example embodiment;
FIG. 2 illustrates a support assembly included in a high-temperature polymer electrolyte membrane fuel cell stack according to an example embodiment;
FIG. 3 illustrates a cell unit and a cooling plate included in a high-temperature polymer electrolyte membrane fuel cell stack according to an example embodiment;
FIG. 4 is a top view of an end plate according to an example embodiment;
FIG. 5 is a top view of a first independent cooling plate according to an example embodiment;
FIG. 6 is a top view of a second independent cooling plate according to an example embodiment;
FIG. 7 is a flowchart illustrating a controlling method of a high-temperature polymer electrolyte membrane fuel cell stack according to an example embodiment; and
FIG. 8 is a flowchart illustrating a controlling method of a high-temperature polymer electrolyte membrane fuel cell stack according to another example embodiment.

### DETAILED DESCRIPTION

Hereinafter, some example embodiments will be described in detail with reference to the accompanying drawings. Regarding the reference numerals assigned to the elements in the drawings, it should be noted that the same elements will be designated by the same reference numerals, wherever possible, even though they are shown in different drawings. Also, in the description of example embodiments, detailed description of well-known related structures or functions will be omitted when it is deemed that such description will cause ambiguous interpretation of the present disclosure.

In addition, terms such as first, second, A, B, (a), (b), and the like may be used herein to describe components. Each of these terminologies is not used to define an essence, order or sequence of a corresponding component but used merely to distinguish the corresponding component from other component(s). It should be noted that if it is described in the specification that one component is "connected", "coupled", or "joined" to another component, a third component may be "connected", "coupled", and "joined" between the first and second components, although the first component may be directly connected, coupled or joined to the second component.

A component having a common function with a component included in one example embodiment is described using a like name in another example embodiment. Unless otherwise described, a description made in one example embodiment may be applicable to another example embodiment and a detailed description within a duplicate range is omitted.

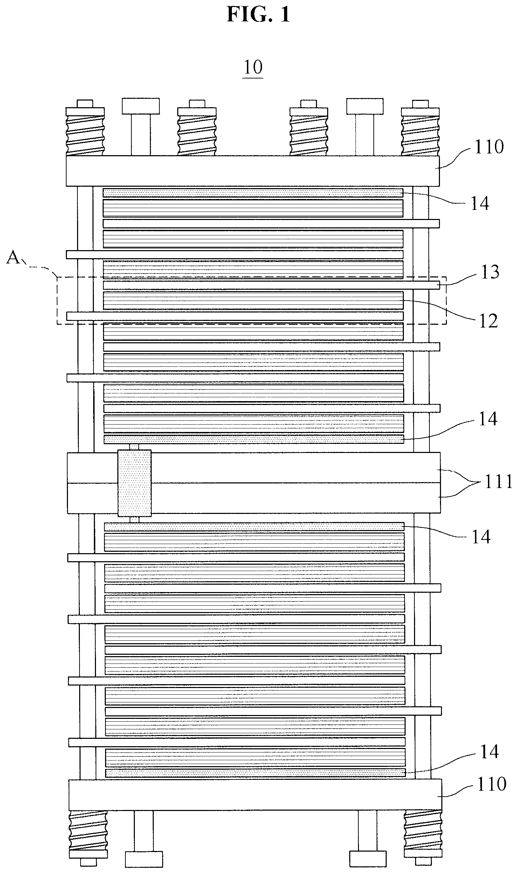

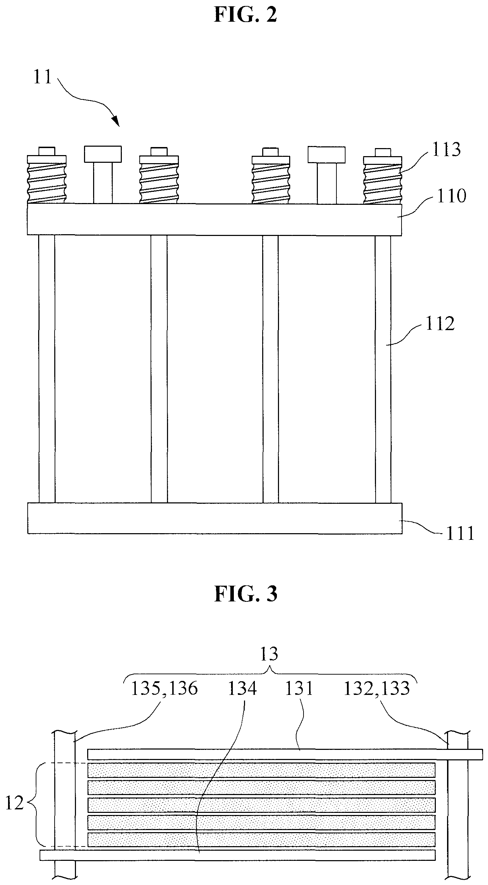

FIG. 1 is a front view of a high-temperature polymer electrolyte membrane fuel cell stack according to an example embodiment, FIG. 2 illustrates a support assembly included in a high-temperature polymer electrolyte membrane fuel cell stack according to an example embodiment, and FIG. 3 illustrates a cell unit and a cooling plate included in a high-temperature polymer electrolyte membrane fuel cell stack according to an example embodiment. In FIG. 3, a clamping bar 112 in a portion A of FIG. 1 is omitted.

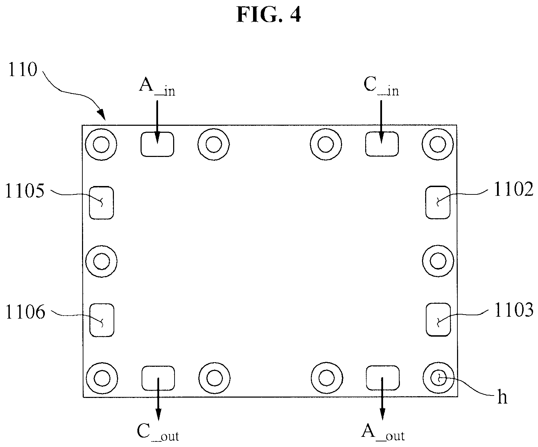

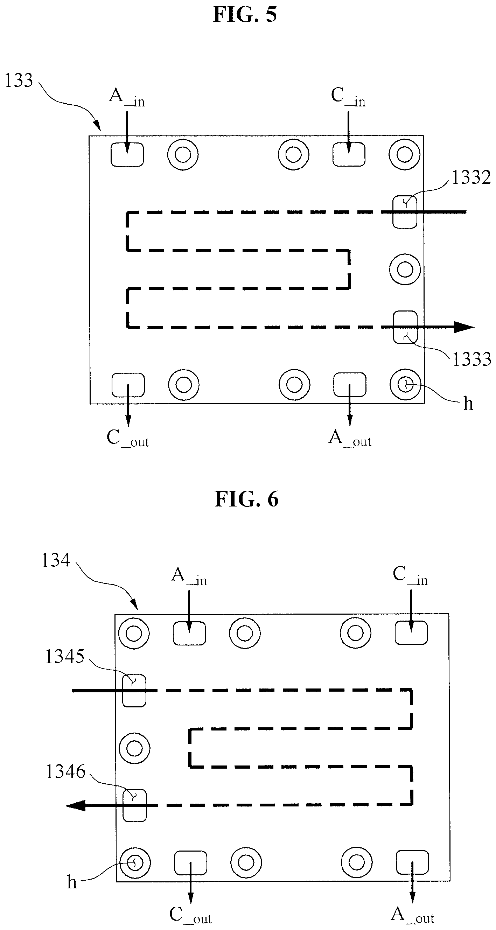

FIG. 4 is a top view of an end plate according to an example embodiment, FIG. 5 is a top view of a first independent cooling plate according to an example embodiment, and FIG. 6 is a top view of a second independent cooling plate according to an example embodiment.

Referring to FIGS. 1 through 6, a high-temperature polymer electrolyte membrane fuel cell stack (hereinafter, referred to as high-temperature PEMFC stack) 10 may include a support assembly 11, a cell unit 12, a cooling assembly 13, and a current collector 14 configured to provide a produced current to an outside.

The support assembly 11 may support a plurality of cell units 12 and the cooling assembly 13. The support assembly 11 may include an end plate 110, a middle end plate 111, a clamping bar 112, and a relief spring 113.

The end plate 110 is a plate configured to couple with each of both ends of the high-temperatures PEMFC stack 10, and may pressurize other configurations disposed between two end plates 110. The end plate 110 may include a first refrigerant inflow port 1102 through which a first refrigerant inflow passage 132 configured to guide a refrigerant that flows in a first cooling plate 131 passes, a first refrigerant outflow port 1103 through which a first refrigerant outflow passage 133 configured to guide a refrigerant that flows out from the first cooling plate 131 passes, a second refrigerant inflow port 1105 through which a second refrigerant inflow passage 135 configured to guide a refrigerant that flows in a second cooling plate 134 passes, a second refrigerant outflow port 1106 through which a second refrigerant outflow passage 136 configured to guide a refrigerant that flows out from the second cooling plate 134 passes, an anode inflow port A_in configured to guide hydrogen that flows in the cell unit 12, a cathode inflow port C_in configured to guide air that flows in the cell unit 12, an anode outflow port A_out configured to guide hydrogen that flows out from the cell unit 12, a cathode outflow port C_out configured to guide air that flows out from the cell unit 12, and a clamping hole h through which the clamping bar 112 penetrates.

The end plate 110 may be provided in, for example, a rectangular shape to achieve the optimal spatial use. In this case, the first refrigerant inflow port 1102 and the first refrigerant outflow port 1103 may be formed on one side of the end plate 110, and the second refrigerant inflow port 1105 and the second refrigerant outflow port 1106 may be formed on the other side of the end plate 110. For example, the first refrigerant inflow port 1102 and the first refrigerant outflow port 1103 may be disposed on a side that faces the second refrigerant inflow port 1105 and the second refrigerant outflow port 1106.

A plurality of clamping holes h may be disposed to be separate apart from each other along the periphery of the end plate 110. Each single clamping hole h may be formed at each corner of the end plate 110. Also, one or more clamping holes h may be formed between corners.

The middle end plate 111 is a plate disposed at a center portion between the two end plates 110 and may further enhance a fixing force. The high-temperature PEMFC stack 10 operates at a high temperature and thus, has a relatively high thermal expansion compared to a low-temperature PEMFC stack. Accordingly, due to the thermal expansion, a separating plate that constitutes the cell unit 12 may have a relatively high risk of being damaged. To prevent the damage, a thickness of the separating plate may be increased. If the separating plate becomes thick, a sufficient fixing force may not be achieved using the two end plates 110 alone. Accordingly, the fixing force may be enhanced by additionally disposing the middle end plate 111 at a location corresponding to the center portion between the two end plates 110.

The clamping bar 112 may be provided between the two end plates 110 or may be provided between the end plate 110 and the middle end plate 111, thereby fixing configurations disposed between the two end plates 110. The clamping bar 112 may be provided to penetrate at least a portion of the configurations disposed between the two end plates 110 and to align the corresponding configurations.

The relief spring 113 is provided at an end of the clamping bar 112 and may pressurize configurations disposed between the two end plates 110 or between each end plate 110 and the middle end plate 111. The pressure may be distributed to be constant on the separating plate of the cell unit 12 by adjusting a location and a length of the relief spring 113.

The cell unit 12 may be configured by stacking a plurality of separating plates. For example, the cell unit 12 may be configured by stacking five separating plates. In one example, the cell unit 12 may be understood as a collective body of separating plates positioned between two cooling plates, for example, the first independent cooling plate 131 and the second independent cooling plate 134. A plurality of cell units 12 may be stacked in a vertical direction. The entire output of the high-temperature PEMFC stack 10 may be determined based on a number of cell units 12.

Each of the separating plates that constitute the cell unit 12 may include a hydrogen flow path through which hydrogen flows and an air flow path through which air flows, and may not include a refrigerant flow path through which a refrigerant flows. Instead of forming the refrigerant flow path on the cell unit 12, a cooling function may be performed through the cooling assembly 13 using an independent cooling plate. It will be described below.

The cooling assembly 13 is configured to remove the heat generated from the high-temperature PEMFC stack 10, and may remove the heat generated from the cell unit 12 by moving the refrigerant using an external manifold scheme. Instead of inserting a cooling plate between the respective separating plates to prevent a significant increase in the entire thickness of the high-temperature PEMFC stack 10, the cooling plates 131 and 134, for example, the first independent cooling plate 131 and the second independent cooling plate 134, may be, respectively, provided on a top surface and a bottom surface of the cell unit 120 including the plurality of separating plates based on a thickness of separating plates that constitute the cell unit 12.

The cooling assembly 13 may include a plurality of first independent cooling plate 131 disposed on top surfaces of the plurality of cell units 12, respectively, a first refrigerant inflow passage 132 configured to guide a refrigerant that flows in each of the plurality of first independent cooling plates 131, a first refrigerant outflow passage 133 configured to guide a refrigerant that flows out from each of the plurality of first independent cooling plates 131, a plurality of second independent cooling plates 134 disposed on bottom surfaces of the plurality of cell units 12, respectively, a second refrigerant inflow passage 135 configured to guide a refrigerant that flows in each of the plurality of second independent cooling plates 134, and a second refrigerant outflow passage 136 configured to guide a refrigerant that flows out from each of the plurality of second independent cooling plates 134.

Each of the first independent cooling plate 131 and the second independent cooling plate 134 may be formed using a metal material, for example, stainless steel, having a strength than a material of the cell unit 12. In this case, compared to an existing cooling plate, the cooling plates, for example, the first independent cooling plate 131 and the second independent cooling plate 134, may have an enhanced mechanical strength. Accordingly, it is possible to prevent a damage to the cooling plate under a high temperature operating condition.

In the related art, an internal manifold cooling structure is provided by integrally forming a cooling flow path inside of a separating plate. In this case, the cooling flow path may be damaged due to a high temperature operating condition and a refrigerant may be leaked, which may lead to degrading the performance. Also, a graphite board including a mixture of a porous material and engineering plastic that fills the porous medium may be used for the separating plate. In this case, it may not become a serious issue since water having a high surface tension is used for a low-temperature PEMFC stack. However, since old having a high boiling point is used as a refrigerant in the high-temperature PEMFC stack, the oil may permeate the separating plate including a heterogeneous material due to a high temperature and a low surface tension of the oil, and the performance may be significantly degraded. However, in the example embodiments, an external manifold cooling scheme is employed to prevent each separating plate of the cell unit 12 from including a refrigerant flow path. Also, using an independent cooling plate formed using a metal material having a high mechanical strength, it is possible to significantly decrease a risk of damage to the separating plate. Also, although the damage occurs, it is possible to prevent a refrigerant from directly flowing in a separating plate. Accordingly, durability may be significantly enhanced.

In an example in which the cooling plate 131, 134 and the cell unit 12 are formed using different materials, contact resistance between both surfaces may increase compared to an example in which the cooling plate 131, 134 and the ceiling unit 12 are formed using the same material. Accordingly, a buffering layer may be inserted between the cooling plate 131, 134 and the cell unit 12 to decrease the contact resistance. That is, the high-temperature PEMFC stack 10 may further include a first buffering layer disposed between the first independent cooling plate 131 and the top surface of the cell unit 12 and a second buffering layer disposed between the second independent cooling plate 134 and the bottom surface of the cell unit 12. Here, each of the first buffering layer and the second buffering layer may be formed using a material having a high conductivity and flexibility.

For example, the buffering layer may be a gas diffusion layer (GDL), a gas diffusion layer on which a micro porous layer (MPL) is stacked, a layer formed using Grafoil, or a layer formed using a metal foam.

The gas diffusion layer may be formed using a porous carbon material, such as carbon cloth or carbon paper including carbon fiber, etc. The gas diffusion layer has an excellent electrical conductivity and porous structure and thus, may decrease a contact resistance with the separating plate.

Also, the gas diffusion layer may be provided in a structure in which a micro porous layer dried after applying a slurry including conductive carbon particles each with a micron size is stacked on the gas diffusion layer. Accordingly, conductivity may be enhanced.

Grafoil indicates a conductive sealing material that uses a carbon material.

Metal foam indicates an elastic conductive product as a member formed using, for example, a metallic thin wire and having a volume.

The first independent cooling plate 131 may include a first refrigerant inflow port 1312 and a first refrigerant outflow port 1313 that are connected to the first refrigerant inflow passage 132 and the first refrigerant outflow passage 133, respectively, and communicate with a refrigerant flow path formed in the first independent cooling plate 131. A refrigerant that flows in through a single first refrigerant inflow passage 132 may be divided and thereby flow in the first refrigerant inflow port 1312 formed in each of the plurality of first independent cooling plates 131, and may remove the heat generated from the cell unit 12 while flowing in each first independent cooling plate 131 and may flow out to a single first refrigerant outflow passage 133 through each first refrigerant outflow port 1313.

The first independent cooling plate 131 may include a first protrusion that does not overlap the cell unit 12 based on a direction (hereinafter, a stacking direction) in which the cell unit 12 is stacked. The first refrigerant inflow port 1312 and the first refrigerant outflow port 1313 may be connected to the first protrusion.

The second independent cooling plate 134 may include a second refrigerant inflow port 1345 and a second refrigerant outflow port 1346 that are connected to the second refrigerant inflow passage 135 and the second refrigerant outflow passage 136, respectively, and communicate with a refrigerant flow path formed in the second independent cooling plate 134. A refrigerant that flows in through a single second refrigerant inflow passage 135 may be divided and thereby flow in the second refrigerant inflow port 1345 formed in each of the plurality of second independent cooling plates 134, and may remove the heat generated from the cell unit 12 while flowing in each second independent cooling plate 134, and may flow out to a single second refrigerant outflow passage 136 through each second refrigerant outflow port 1346.

The second independent cooling plate 134 may include a second protrusion that does not overlap the cell unit 12 based on, for example, the stacking direction of the cell unit 12. The second refrigerant inflow port 1345 and the second refrigerant outflow port 1346 may be connected to the second protrusion. The second protrusion and the first protrusion may not overlap based on the stacking direction of the cell unit 12.

The first refrigerant inflow passage 132, the first refrigerant outflow passage 133, the second refrigerant inflow passage 135, and the second refrigerant outflow passage 136 may be disposed in an elongated shape along the stacking direction of the plurality of cell units 12. The second refrigerant inflow passage 135 and the second refrigerant outflow passage 136 may be disposed on a side that faces the first refrigerant inflow passage 132 and the first refrigerant outflow passage 133.

According to a four-external manifold cooling structure, a refrigerant flowing in a zigzagged form on the opposite side may cool the cell unit 12. Also, by providing a plurality of refrigerant inflow passages and a plurality of refrigerant outflow passages, it is possible to enhance the mobility of the refrigerant compared to a case in which a single refrigerant inflow passage and a single refrigerant outflow passage are provided. Although the example of providing two refrigerant inflow passages and two refrigerant outflow passages is described herein, an example of providing three refrigerant inflow passages and three refrigerant outflow passages may be included in the scope of the disclosure.

If an operation temperature is significantly low, a performance of a stack may be degraded. If the operation temperature is significantly high, a degradation phenomenon may become faster and a lifespan of the stack may decrease. Accordingly, the management of a temperature may become a very important issue in a high-temperature PEMFC stack. To achieve an appropriate performance and lifespan, all of the stacks need to have a uniform temperature distribution. In the case of a low-temperature PEMFC stack, if a predetermined period of time is elapsed after the operation starts, a temperature deviation of the entire stacks may not be great and thus, the entire temperature may be sufficiently estimated using only a temperature measured from a portion of the entire stacks. Accordingly, the low-temperature PEMFC stack may employ a method of installing a temperature sensor on an end plate having a sufficient installation space, measuring a temperature of the end plate, and estimating and controlling a temperature of the entire stacks. However, in the case of the high-temperature PEMFC stack, a temperature may increase during the flow of a refrigerant along an external manifold due to a characteristic, such as a high temperature operating condition. In addition, a partial temperature deviation appears to be great depending on a non-uniform temperature inside the cell unit or an external heat insulation state. Also, since each of the separating plates that constitute a stack has a thin thickness, it is difficult to install a temperature sensor on the separating plate.

According to the example embodiment, the high-temperature PEMFC stack 10 including independent cooling plates, for example, the first independent cooling plate 131 and the second independent cooling plate 134 may outperform the found issues and may sense a local temperature on each area by installing a temperature sensor on at least one of the first independent cooling plate 131 and the second independent cooling plate 134.

For example, the temperature sensor may be installed on the first protrusion of the first independent cooling plate 131 and/or the second protrusion of the second independent cooling plate 134 that do not overlap the cell unit 12 based on the stacking direction of the cell unit 12. For example, the temperature sensor may be installed on each of two refrigerant ports provided per the plurality of cooling plates, for example, the first independent cooling plate 131 and the second independent cooling plate 134.

For example, a thermal couple may be used for the temperature sensor. The thermal couple refers to a device made of two types of metals to measure a wide range of temperature using Seebeck effect, and may be used under a high temperature operating condition, such as in the high-temperature PEMFC stack 10 due to its excellent durability.

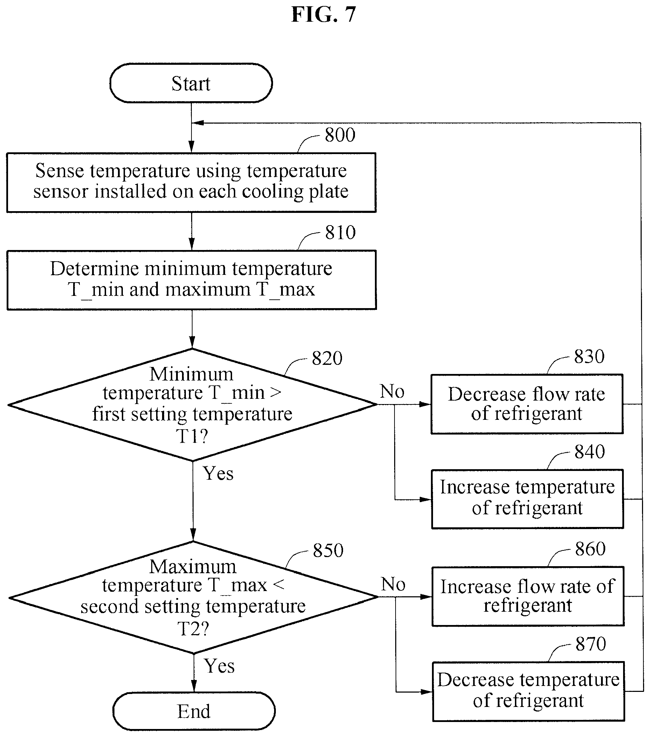

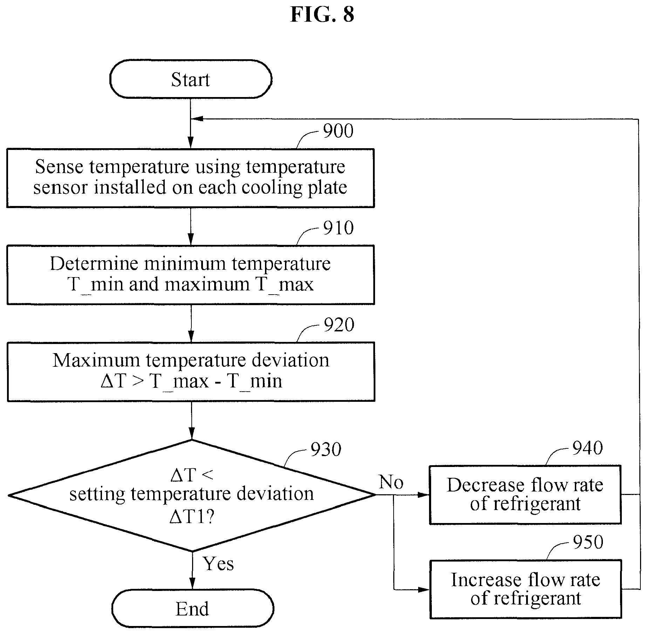

The high-temperature PEMFC stack 10 may further include a controller configured to adjust a flow rate or a temperature of a refrigerant that flows in at least one of the first independent cooling plate 131 and the second independent cooling plate 134. The controller may control the flow rate or the temperature of the refrigerant based on a value sensed at the temperature sensor. Hereinafter, a controlling method of the high-temperature PEMFC stack 10 according to an example embodiment will be described with reference to FIGS. 7 and 8.

FIG. 7 is a flowchart illustrating a controlling method of a high-temperature PEMEC stack according to an example embodiment.

Referring to FIG. 7, the high-temperature PEMEC stack controlling method may include operation 800 of sensing a temperature using a plurality of temperature sensors installed on a plurality of cooling plates, for example, the first independent cooling plate 131 and the second independent cooling plate 131, operation 810 of determining a minimum temperature T_min and a maximum temperature T_max based on the temperatures sensed at the plurality of temperature sensors, and operations 820, 830, 840, 850, 860, and 870 of controlling a flow rate or a temperature of a refrigerant that flows in the plurality of cooling plates based on information about the minimum temperature T_min and the maximum temperature T_max.

For example, in operation 820, whether the minimum temperature T_min is greater than a first setting temperature T1 may be determined. When the minimum temperature T_min is determined to be less than or equal to the first setting temperature T1 in operation 820, it may be regarded that a required performance is not achieved due to a low operation temperature of at least a portion of the plurality of cell units 12. Accordingly, the operation temperature of the cell unit 12 may increase by performing operation 830 of decreasing the flow rate of the refrigerant or operation 840 of increasing the temperature of the refrigerant. Operations 830 and 840 may be simultaneously performed. Alternatively, either operation 830 or operation 840 may be performed. Operation 800 may be performed again after performing operations 860 and 840. Conversely, when the minimum temperature T_min is determined to be greater than the first setting temperature T1 in operation 820, operation 850 may be performed.

In operation 850, whether the maximum temperature T_max is less than a second setting temperature T2 may be determined. Here, the second setting temperature T2 may be set to a value greater than the first setting temperature T1. Similar to operations 830 and 840, operation 860 and/or operation 870 may be performed depending on a result of operation 850.

The order of operations 820 and 850 may not be limited. Operation 820 may be performed after performing operation 850.

According to the aforementioned control method, it is possible to manage the performance and a lifespan of a stack to be suitable for a desired condition.

FIG. 8 is a flowchart illustrating a controlling method of a high-temperature polymer electrolyte membrane fuel cell stack according to another example embodiment.

Referring to FIG. 8, the high-temperature PEMEC stack controlling method may include operation 900 of sensing a temperature using a plurality of temperature sensors installed on a plurality of cooling plates, for example, the first independent cooling plate 131 and the second independent cooling plate 131, operation 910 of determining a minimum temperature T_min and a maximum temperature T_max based on the temperatures sensed at the plurality of temperature sensors, and operations 920, 930, 940, and 950 of controlling a flow rate or a temperature of a refrigerant that flows in the plurality of cooling plates based on information about the minimum temperature T_min and the maximum temperature T_max.

For example, in operation 920, a maximum temperature deviation ΔT may be calculated based on the minimum temperature T_min and the maximum temperature T_max. In operation 930, whether the maximum temperature deviation ΔT is less than a setting temperature deviation ΔT1 may be determined. When the maximum temperature deviation ΔT is determined to be less than a setting temperature deviation ΔT1 in operation 930, it may be regarded that a portion of the cell units 12 is not properly cooled. Accordingly, the maximum temperature deviation ΔT may decrease by performing operation 940 of increasing the flow rate of the refrigerant or operation 950 of decreasing the temperature of the refrigerant. Operation 900 may be performed after performing operations 940 and 950.

According to the aforementioned control method, the stack may have a uniform temperature distribution. Accordingly, the performance and the lifespan of the cell units 12 that constitute the stack may become uniform.

As described above, according to example embodiments, it is possible to achieve an excellent durability and performance using a new type of a cooling plate. Also, it is possible to uniformly manage a performance, a degradation level, and a cell life, that is, a lifespan of a fuel cell stack by achieving an enhanced uniform stack temperature distribution using a thermo couple attached to the new type of the cooling plate.

The apparatuses described herein may be implemented using hardware components, software components, and/or combination of the hardware components and the software components. For example, the apparatuses and the components may be configured using at least one universal computer or special purpose computer, for example, a processor, a controller and an arithmetic logic unit (ALU), a digital signal processor, a microcomputer, a field programmable array (FPA), a programmable logic unit (PLU), a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will be appreciated that a processing device may include multiple processing elements and multiple types of processing elements. For example, a processing device may include multiple processors or a processor and a controller. In addition, different processing configurations are possible, such a parallel processors.

The software may include a computer program, a piece of code, an instruction, or some combination thereof, to independently or collectively instruct and/or configure the processing device to operate as desired, thereby transforming the processing device into a special purpose processor. Software and/or data may be embodied permanently or temporarily in any type of machine, component, physical or virtual equipment, computer storage medium or device, or in a propagated signal wave capable of providing instructions or data to or being interpreted by the processing device. The software also may be distributed over network coupled computer systems so that the software is stored and executed in a distributed fashion. The software and data may be stored by one or more non-transitory computer readable recording mediums.

The methods according to the above-described example embodiments may be recorded in non-transitory computer-readable media including program instructions to implement various operations of the above-described example embodiments. The media may also include, alone or in combination with the program instructions, data files, data structures, and the like. The program instructions recorded on the media may be those specially designed and constructed for the purposes of example embodiments, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher level code that may be executed by the computer using an interpreter. The above-described devices may be configured to act as one or more software modules in order to perform the operations of the above-described example embodiments, or vice versa.

A number of example embodiments have been described above. Nevertheless, it should be understood that various modifications may be made to these example embodiments. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. A high-temperature polymer electrolyte membrane fuel cell stack comprising:
a cell unit;
a first independent cooling plate disposed on a top surface of the cell unit;
a second independent cooling plate disposed on a bottom surface of the cell unit;
a first buffering layer disposed between the first independent cooling plate and the top surface of the cell unit, and configured to reduce a contact resistance between the first independent cooling plate and the top surface of the cell unit;
a second buffering layer disposed between the second independent cooling plate and the bottom surface of the cell unit, and configured to reduce a contact resistance between the second independent cooling plate and the bottom surface of the cell unit, and
each of the first independent cooling plate and the second independent cooling plate is formed using a metal material having a strength than a material of the cell unit.

2. The high-temperature polymer electrolyte membrane fuel cell stack of claim 1, wherein the first buffering layer or the second buffering layer is a gas diffusion layer, a gas diffusion layer on which a micro porous layer is stacked, a layer formed using Grafoil, and a layer formed using a metal form.

3. The high-temperature polymer electrolyte membrane fuel cell stack of claim 2, further comprising:
a support assembly configured to support the cell unit, the first independent cooling plate, and the second independent cooling plate.

4. The high-temperature polymer electrolyte membrane fuel cell stack of claim 3, further comprising:
at least one temperature sensor installed on at least one of the first independent cooling plate and the second independent cooling plate.

5. The high-temperature polymer electrolyte membrane fuel cell stack of claim 4, wherein the cell unit is configured by stacking a plurality of separating plates.

6. The high-temperature polymer electrolyte membrane fuel cell stack of claim 5, wherein each of the plurality of separating plates includes a hydrogen flow path through which hydrogen flows and an air flow path through which air flows, and does not include a refrigerant flow path through which a refrigerant flows.

7. The high-temperature polymer electrolyte membrane fuel cell stack of claim 6, further comprising:
a controller configured to control a flow rate or a temperature of a refrigerant that flows in at least one of the first independent cooling plate and the second independent cooling plate,
wherein the controller is further configured to control the flow rate or the temperature of the refrigerant based on a temperature sensed at the temperature sensor.

8. The high-temperature polymer electrolyte membrane fuel cell stack of claim 7, wherein the temperature sensor is a thermal couple.

9. A controlling method of a high-temperature polymer electrolyte membrane fuel cell stack, the method comprising:
sensing a temperature using a plurality of temperature sensors installed on a plurality of cooling plates for cooling a cell unit, respectively;
determining a minimum temperature and a maximum temperature based on the temperatures sensed at the plurality of temperature sensors; and
controlling a flow rate or a temperature of a refrigerant that flows in the plurality of cooling plates based on information about the minimum temperature and the maximum temperature.

10. The method of claim 9, further comprising:
determining whether the minimum temperature is greater than a first setting temperature; and
determining whether the maximum temperature is less than a second setting temperature that is greater than the first setting temperature.

11. The method of claim 9, further comprising:
calculating a maximum temperature deviation based on the minimum temperature and the maximum temperature; and
determining whether the maximum temperature deviation is less than a setting temperature deviation.

12. A non-transitory computer-readable medium storing a program to implement the method of claim 9.
